# EUROPEAN PATENT APPLICATION

(11) **EP 0 521 265 A2**
(43) Date of publication of application: **07.01.1993**
(21) Application number: 92107917.4
(22) Date of filing: 12.05.1992
(51) Int. Cl.: G06F 9/46, G06F 15/16

(54) **Parallel processing system**

(30) Priority: 02.07.1991 US 724688
(71) Applicant: International Business Machines Corporation, Armonk, N.Y. 10504 (US)
(72) Inventor: Gregor, Steven L., Endicott, New York 13760 (US); Iannucci, Robert Alan, Fishkill, New York 12524-1003 (US)
(74) Representative: Schäfer, Wolfgang, Dipl.-Ing.

(57) **Abstract**

A parallel processing system having at least first and second processors, main memory, and local memories for each processor. Each memory contains processes stored in a plurality of data word locations. Each process comprises map data and one or more units of operating data. The map data comprises processor identifier data and invocation availability data. The address of the map data of a process has a standard relationship to the addresses of all of the operating data of the processes. Each processor comprises means for addressing map data of a process each time a data word location in that process is addressed.

## Description

### Background of the Invention

The invention relates to electronic data processing systems containing two or more processors which are executing in parallel. The invention also relates to the data structure of such a system.

In an electronic data processing system, a processor sequentially executes a series of instructions in order to perform one or more programmed tasks. If the instructions and tasks can be subdivided into two or more subtasks, and if two or more subtasks are simultaneously executed on two or more different processors, the time required to execute the program can be reduced.

It has been known to subdivide a series of instructions in this manner into a plurality of subtasks (also referred to as processes). Each process is then assigned to one of a plurality of individual processors for execution on that processor.

Since different processes may need to communicate with each other during execution of the processes, the assignment of a process to a particular processor for execution is determined prior to execution of the program. Moreover, in existing parallel data processing systems, the assignment of a process to a processor cannot be changed during execution of the program.

### Summary of the Invention

It is an object of the invention to provide an electronic data processing system containing multiple processors in which processes (subtasks) can be assigned and reassigned for execution on different processors concurrent with execution of the program containing the processes.

According to the present invention, a parallel processing system comprises at least first and second processors, a main memory communicating with both processors, a first local memory communicating with the first processor, and a second local memory communicating with the second processor. Each processor comprises means for addressing map data of a process each time a data word location in that process is addressed. The map data comprises processor map data having a value equal to the identifier of one processor, and invocation availability data having a value of "available" or "unavailable".

In order to address map data of a process each time a data word location in the process is addressed, in one embodiment of the invention the address of each data word in a process comprises a fixed base for the process plus a variable offset. The address for the map data for the process is the fixed base for the process plus a standard offset which is the same for all processes. The standard offset may be, for example, zero.

By providing each processor with means for addressing map data of a process each time a data word location in the process is addressed, it is possible to monitor the identity of the processor which is scheduled to execute the process, and the availability of the process for execution. With this monitoring capability, it becomes possible to reassign processes during execution of the program, so as to increase the utilization efficiency of all of the processors in the multiprocessor system.

### Brief Description of the Drawing

- Fig. 1: is a block diagram of a parallel processing system according to the present invention.
- Fig. 2: is a block diagram showing the data structure of a memory used in the parallel processing system according to the present invention.
- Fig. 3: is a block diagram of a portion of a processor for use in a parallel processing system according to the present invention.

### Description of the Preferred Embodiments

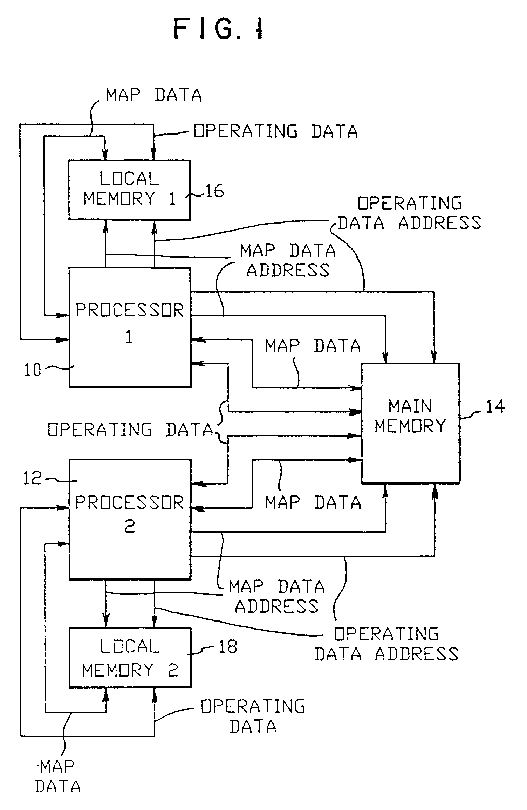

Fig. 1 is a block diagram of an example of a parallel processing system according to the present invention. The parallel processing system includes at least first and second processors 10 and 12. Each processor has an identifier. Thus, for example, processor 10 is identified with the number 1, and processor 12 is identified with the number 2. In an example of the present invention in which each data word has 64 binary digits (bits), the processor identifier may consist of 12 bits.

The parallel processing system further includes a main memory 14, and local memories 16 and 18. The main memory 14 communicates with both the first and second processors 10 and 12. The first local memory 16 communicates with the first processor 10. The second local memory 18 communicates with the second processor 12. Each processor communicates with a memory by providing address data to the memory, and by either sending data words from the processsor to the memory, or receiving data words from the memory to the processor, as shown in Fig. 1.

The communication between a processor and a memory may be direct, such as in the case of a local memory 10 or 12. Alternatively, the the communication between a processor and a memory may be by way of one or more intermediate processors (not shown, such as for main memory 14.

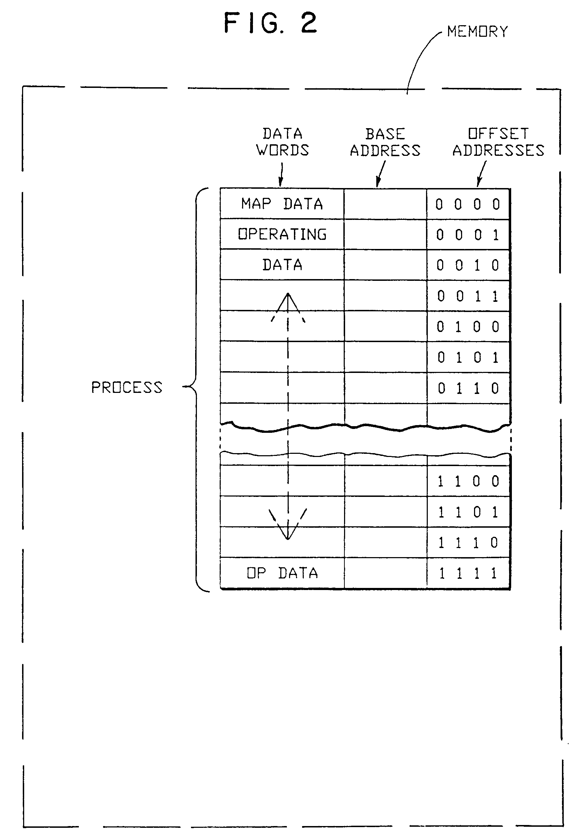

Fig. 2 schematically shows the memory data structure in the parallel processing system according to the present invention. Each memory comprises a plurality of data word locations. Each data word location has an address.

Each memory contains a plurality of processes, where each process is stored in a plurality of data word locations. Each process comprises map data and one or more units of operating data. The map data comprises processor map data and invocation availability data. The processor map data has a value equal to the identifier of one processor. The invocation availability data has a value of "available" or "unavailable". In the example in which each data word consists of 64 bits, the invocation availability data may, for example, consist of five bits.

According to the invention, the address of the map data of a process has a standard relationship to the addresses of all of the operating data of the process. This standard relationship is the same for all processes used in the system.

Fig. 2 shows an example of the "standard relationship" between the address of the map data of a process and the addresses of all of the operating data of the process. In this example, the address of each data word comprises the sum of a fixed base address for the process, plus an offset address. For the operating data in the process, the offset is variable and depends on the data word to be selected. For the map data in a process, the offset is a fixed standard which is the same for all processes. For example, the standard offset for the map data shown in Fig. 2 is zero.

In the invention, the operating data may consist of process instructions, operand data for process instructions, or both.

According to the present invention, each processor in the parallel processing system comprises means for addressing map data of a process each time a data word location in that process is addressed.

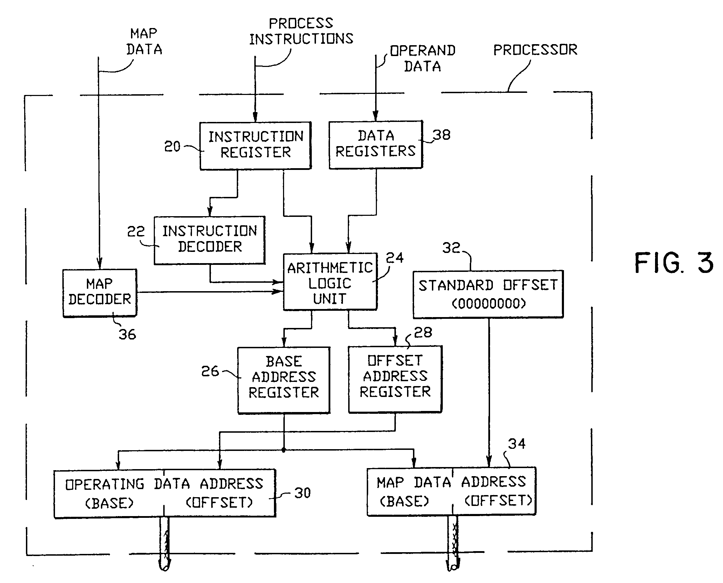

Fig. 3 is a block diagram of an example of a portion of a processor for use in a parallel processing system according to the invention. The processor includes an instruction register 20 for receiving process instructions. The process instructions may be operated upon by an instruction decoder 22 and an arithmetic logic unit 24 to generate a base address for storage in a base address register 26 and for generating an offset address for storage and an offset address register 28. In this example, the base address from register 26 is combined with the offset address from register 28 to generate an operating data address which is stored in register 30. At the same time, the base address from register 26 is combined with the standard offset 32 to form the map data address in register 34. In this way, the processor addresses the map data of a process each time a data word location in that process is addressed.

Thus, the present invention provides a "standard relationship" between the address of the map data of a process and the addresses of all of the operating data in the process, and contains a processor which addresses the map data of a process each time a data word location in that process is addressed. Since the map data contains a processor identifier and invocation availability data, it is possible to reassign the process from one processor to a different processor during execution of the program containing the process, while maintaining communication between different processes of the program.

For the purpose of maintaining communication between different processes of a program, a map decoder 36 decodes the map data for the process containing operand data which is loaded into one of data registers 38. If the map decoder 36 determines that the operand data is "available" then an instruction is executed on the operand data. If the map decoder 36 determines that the invocation availability is "unavailable" (or some other value such as "relocating"), execution of the instruction on the operand data is suspended. If execution is suspended, the map decoder 36 determines the processor identifier from which the correct data can be obtained.

## Claims

1. A parallel processing system comprising:
at least first and second processors, each processor having an identifier;
a main memory communicating with the first processor and the second processor, said main memory comprising a plurality of data word locations, each data word location having an address, said main memory containing a plurality of processes stored in a plurality of data word locations, each process comprising map data and one or more units of operating data, said map data comprising processor map data and invocation availability data, the processor map data having a value equal to the identifier of one processor, the invocation availability data having a value of "available" or "unavailable", the address of the map data of a process having a standard relationship to the addresses of all of the operating data of the process, said main memory containing at least an original copy of a first process, the processor map data of the original copy having a value equal to the first processor identifier;
a first local memory communicating with the first processor, said first local memory comprising a plurality of data word locations, each data word location having a local address, said first local memory containing a local copy of the first process stored in a plurality of data word locations, the local memory address of the map data of the first process having the same standard relationship to the local memory addresses of all of the operating data of the process; and
a second local memory communicating with the second processor;
characterized in that each processor comprises means for addressing map data of a process each time a data word location in that process is addressed.

2. An apparatus as claimed in Claim 1, characterized in that:
the address of each data word of the operating data in a process comprises the sum of a fixed base for the process, plus a variable offset; and
the address of the map data in a process is the fixed base for the process plus a standard offset which is the same for all processes.

3. An apparatus as claimed in Claim 2, characterized in that the address of the map data in a process is the fixed base for the process plus zero offset.

4. An apparatus as claimed in Claim 3, characterized in that the operating data comprises one or more of operand data and process instructions.

5. An apparatus as claimed in Claim 4, characterized in that the map data is addressed simultaneously with the associated data word location.

6. An apparatus as claimed in Claim 5, characterized in that the invocation availability data has a value of "available" or "unavailable", or "relocating".
